# EUROPEAN PATENT APPLICATION

(11) **EP 3 944 475 A1**
(43) Date of publication of application: **26.01.2022**
(21) Application number: 20772581.3
(22) Date of filing: 13.03.2020
(51) Int. Cl.: H02K 5/24, H02K 9/06, H02K 7/00, H02K 1/12, H02K 11/30, H02K 7/18, B63J 3/02

(54) **GENERATOR FOR VESSEL**

(30) Priority: 19.03.2019 KR 20190031353; 11.03.2020 KR 20200030008
(71) Applicant: Hyundai Electric & Energy Systems Co., Ltd., Jongno-gu Seoul 03058 (KR)
(72) Inventor: SON, Rak-Won, Seoul 03058 (KR); CHOI, Jang-Un, Seoul 03058 (KR); LEE, Joon-Yeob, Seoul 03058 (KR); JEON, Moo-Jong, Seoul 03058 (KR); KNOBLAUCH, Miksa Irányossy, 1145 Budapest (HU); LÁZÁR, Gáspár, 1145 Budapest (HU); ESZENYI, Balázs, 1145 Budapest (HU); PINTÉR, Zoltán, 1145 Budapest (HU)
(74) Representative: Nederlandsch Octrooibureau
(86) International application number: PCT/KR2020/003500
(87) International publication number: WO 2020/189967

(57) **Abstract**

A generator for a vessel, according to the present invention, may comprise: a detachable vibration prevention unit connected to an engine room, for accommodating an engine provided with a crankshaft, by being connected to the crankshaft, and reducing the vibration of the engine by having a predetermined level of mass; a rotor unit connected to and supported by the detachable vibration prevention unit; a stator unit fixed to the engine room so as to face the rotor unit; a cooling unit connected to the stator unit; and at least one exciter connected to the crankshaft and the stator unit.

## Description

### [Technical Field]

The present disclosure relates to a generator for a vessel.

### [Background Art]

In general, a marine engine is comprised of a cylinder, a piston, a crankshaft, and the like. The crankshaft serves to convert the vertical motion of a piston into rotational motion by being connected to a connecting rod, through connection of bearings.

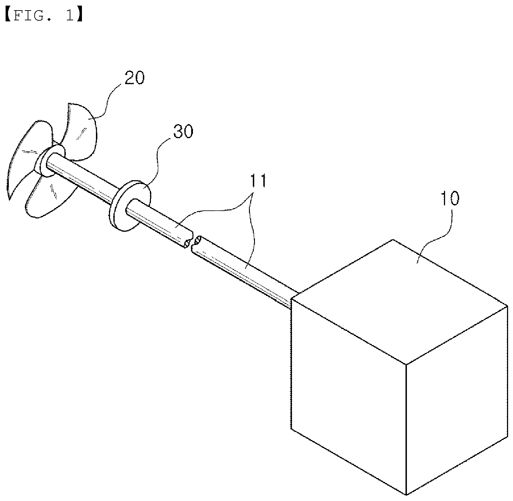

As illustrated in FIG. 1, a propeller 20 for propulsion of a ship is connected to one end of a crankshaft 11 connected to an engine room 10 and exposed to the outside of the engine room 10, to rotate, and a mass material 30 having a predetermined level of mass is also connected to the crankshaft 11, thereby serving to prevent vibrations of the crankshaft by satisfying a predetermined level of moment of inertia.

Recently, research has been being conducted to increase energy efficiency by installing a generator on the crankshaft 11.

### (Patent Document 1) KR 10-2014-0024077 A (February 28, 2014)

### [Disclosure]

### [Technical Problem]

An aspect of the present disclosure is to provide a generator for a vessel having increased space utilization and improved energy efficiency.

An aspect of the present disclosure is to improve the efficiency and convenience of installation work in installing a generator in a vessel.

### [Technical Solution]

The present disclosure relates to a generator for a vessel.

According to an aspect of the present disclosure, a generator for a vessel connected to an engine room accommodating an engine provided with a crankshaft, includes a detachable vibration prevention unit connected to the crankshaft, and having a predetermined level of mass to reduce vibrations of the engine; a rotor unit connected to and supported by the detachable vibration prevention unit; a stator unit fixed to the engine room to face the rotor unit; a cooling unit connected to the stator unit; and at least one exciter connected to the crankshaft and the stator unit.

The detachable vibration prevention unit may include a support body having one end connected to the crankshaft and the other end extending in a radial direction of the crankshaft, and the rotor unit may include a rotor spaced apart from an outer circumferential surface of the crankshaft by being connected to the support body.

The detachable vibration prevention unit may include the support body in contact with the rotor on one surface thereof; and an anti-vibration member provided to be coupled to, or separated from, a surface of the support body, facing the one surface of the support body, and having a predetermined level of mass.

The detachable vibration prevention unit may further include a sub-support body coupled to the one surface of the support body and having an end extending by being bent in a longitudinal direction of the crankshaft, and the rotor unit may include the rotor fixed to the sub-support body and disposed parallel to the crankshaft.

The anti-vibration member may include a first anti-vibration member provided to be coupled to or separated from one surface of the support body and having a predetermined level of mass; and a second anti-vibration member provided to be coupled to or separated from the first anti-vibration member, and having a predetermined level of mass.

The detachable vibration prevention unit may include the support body having a screw groove in one surface to which the anti-vibration member is coupled; the first and second anti-vibration members each having a fastening hole corresponding to the screw groove; and a fastening member having an end penetrating through the fastening hole and inserted into the screw groove.

The rotor may be fixed to an extension of the sub-support body by a bolt.

The stator unit may include a first frame coupled to the engine room; a second frame connected to the first frame and to which a stator is connected; a third frame having one side connected to the second frame and an end extending in an outer circumferential direction of the crankshaft; and a fourth frame connected to the end of the third frame.

The exciter may include an exciter rotor connected to the crankshaft; and an exciter stator connected to the fourth frame, to face the exciter rotor, and at least a portion of the exciter rotor and the exciter stator may be present within an extension line of an outer circumferential surface of the rotor.

The cooling unit may include a cooling housing connected to the second frame; a cooler present in the cooling housing; an air pump fixed to the outside of the cooling housing; and an air duct connected to the air pump, the fourth frame, and the crankshaft.

The cooling unit may further include an air guide member connected to the third frame and having an end bent and extending to face the rotor.

The cooling unit may include a first cooling fan connected to an end of the sub-support body and having an end extending to face the outer circumferential surface of the crankshaft.

The exciter rotor may be connected to the crankshaft by a coupling member, and the cooling unit may include a second cooling fan connected to the coupling member and having an end extending toward an outer circumferential surface of the rotor.

The detachable vibration prevention unit may further include a first sealing member provided on at least one of the support body and the anti-vibration member, and extending in a direction of the stator unit.

The stator unit may further include a second sealing member provided on at least one of the first frame and the second frame, and extending in a direction of the crankshaft.

The air duct and the air guide member may be provided as non-magnetic bodies.

The first sealing member may be provided as a non-magnetic body.

The second sealing member may be provided as a non-magnetic body.

According to an aspect of the present disclosure, a generator for a vessel connected to an engine room accommodating an engine provided with a crankshaft, includes a detachable vibration prevention unit connected to the crankshaft, and having a predetermined level of mass to reduce vibrations of the engine; a rotor unit connected to and supported by the detachable vibration prevention unit; a stator unit fixed to the engine room, to face the rotor unit; a cooling unit connected to the stator unit; and a flow guiding unit connected to the crankshaft and the stator unit.

The stator unit may include a first frame coupled to the engine room; a second frame connected to the first frame and to which a stator is connected; and a third frame having one side connected to the second frame and an end extending in an outer circumferential direction of the crankshaft, and the flow guiding unit may be connected to the crankshaft and the third frame.

The flow guiding unit may include a first flow guide frame connected to the third frame and provided to be inclined; and a second flow guide frame connected to the crankshaft, and extending in a direction of the first flow guide frame in such a manner that an end thereof is spaced apart from the first flow guide frame.

The detachable vibration prevention unit may include a support body having one end connected to the crankshaft and the other end extending in a radial direction of the crankshaft, the rotor unit may include a rotor spaced apart from an outer circumferential surface of the crankshaft by being connected to the support body, and the stator unit may include the stator connected to the second frame and facing the rotor.

The engine room may include an engine room cover, the stator unit may include the first frame coupled to the engine room cover of the engine room, and the engine room cover and the first frame may be provided with a first connection pad therebetween, provided as a non-magnetic body.

The support body and the crankshaft may be provided with a second connection pad therebetween, provided as a non-magnetic body.

### [Advantageous Effects]

According to an embodiment of the present disclosure, the space utilization of the ship may be increased, and the energy efficiency may be improved.

In addition, the efficiency and convenience of the work of installing a generator on the ship may be improved.

### [Description of Drawings]

FIG. 1 illustrates a propeller connected to a general crankshaft.
FIG. 2 schematically illustrates a generator for a vessel according to an embodiment of the present disclosure.
FIG. 3 schematically illustrates a generator for a vessel according to another embodiment of the present disclosure.
FIG. 4 schematically illustrates a generator for a vessel according to another embodiment of the present disclosure.
FIG. 5 schematically illustrates a generator for a vessel according to another embodiment of the present disclosure.
FIG. 6 schematically illustrates a generator for a vessel according to another embodiment of the present disclosure.

### [Best Mode for Invention]

In order to help the understanding of the description of the embodiment of the present disclosure, elements indicated with the same reference numerals in the accompanying drawings are the same elements, and related elements among the elements that perform the same action in each embodiment are marked with the same or similar numbers.

In addition, in order to clarify the gist of the present disclosure, a description of elements and techniques well known in the related art will be omitted, and the present disclosure will be described in detail below with reference to the accompanying drawings.

However, the spirit of the present disclosure is not limited to the presented embodiment, and specific components may be proposed in other forms in which specific components are added, changed, or deleted by those skilled in the art, but this is also included within the scope of the same spirit as the present disclosure.

In addition, a generator for a vessel to be described below may be applied to a vessel, as an engine-mounted generator (EMG).

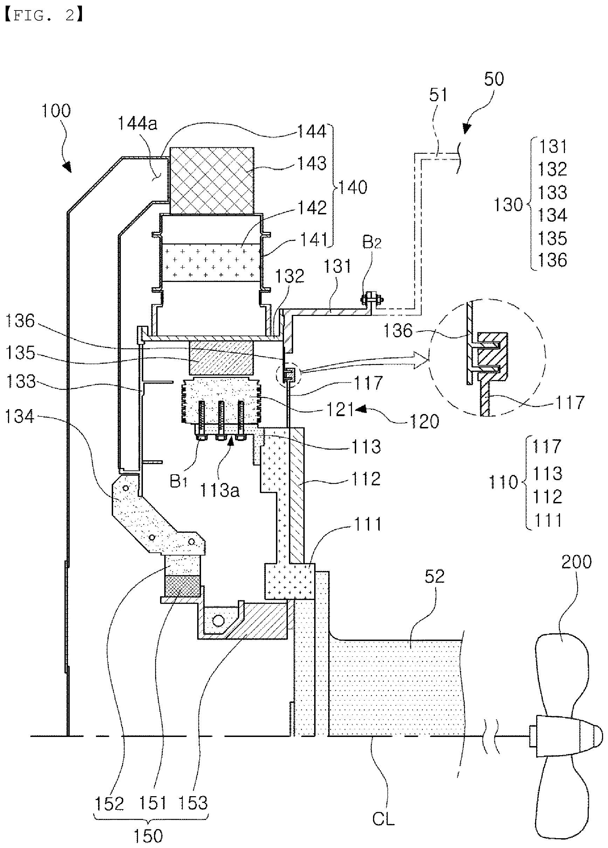

FIG. 2 illustrates a generator 100 for a vessel according to an embodiment of the present disclosure, and the configuration of the generator 100 for a vessel may have a vertical symmetrical structure based on a centerline CL of FIG. 2. A propeller 200 of the vessel may be connected to a crankshaft 52 illustrated in FIG. 2 to provide power to the vessel.

As illustrated in FIG. 2 as above, the generator 100 for a vessel according to an embodiment of the present disclosure is connected to an engine room 50 for accommodating an engine (not illustrated) having the crankshaft 52, and in this case, may be connected to the engine room 50 in the opposite direction to the propeller 200.

In an embodiment of the present disclosure, the generator for a vessel may include a detachable vibration prevention unit 110 connected to the crankshaft 52 of the engine room 50 and having a predetermined level of mass to reduce vibrations of the engine (not illustrated), in detail, the crankshaft 52, a rotor unit 120 connected to the detachable vibration prevention unit 110 and supported by the detachable vibration prevention unit 110, a stator unit 130 fixed to the engine room to face the rotor unit, a cooling unit 140 connected to the stator unit, and at least one exciter 150 connected to the crankshaft 52 and the stator unit.

In this case, the detachable vibration prevention unit 110 supports the rotor unit 120 such that the rotation of the rotor unit 120 is possible. In order for the detachable vibration prevention unit 110 to rotate the rotor unit 120, parts such as bearings (not illustrated) may be used, but the detailed method thereof is not limited by the present disclosure.

The detachable vibration prevention unit 110 includes a support body 111 having one end connected to the crankshaft 52 and the other end extending in the radial direction of the crankshaft 52, and the rotor unit 120 may include a rotor 121 spaced apart from the outer circumferential surface of the crankshaft 52 by being connected to the support body 111.

By such a configuration, the rotor 121 is rotatably supported, and at the same time, may be rotated in conjunction with the crankshaft 52. According to this, by interlocking the rotor 121 with the crankshaft 52, the energy efficiency of the vessel may be improved.

The rotor 121 may be connected to one surface of the support body 111. To connect the rotor 121 to the support body, the detachable vibration prevention unit 110 may further include a sub-support body 113.

The sub-support body 113 may be coupled to the one surface of the support body 111, and the end thereof may be bent and extended in the longitudinal direction of the crankshaft 52.

The rotor 121 may be fixed to a bent extension portion 113a of the crankshaft 52 by a bolt B₁, and thus, the rotor 121 may be disposed to be parallel to the crankshaft 52. The sub-support body 113 may also be coupled to the support body 111 by a coupling member such as a bolt (not illustrated). However, the method is not necessarily limited by the present disclosure.

According to an embodiment of the present disclosure as described above, the arrangement relationship of the related parts inside the generator 100 may efficiently be set, and ultimately, the space utilization may be improved by reducing the size of the generator.

In addition, the convenience of the operation of coupling or separating the rotor 121 to or from the crankshaft 52 may be improved, and the working time may be reduced.

On the other hand, the support body 111 is provided with an anti-vibration member 112. In detail, the anti-vibration member 112 is provided on a surface opposing one surface of the support body 111 to which the sub-support body 113 is coupled. The anti-vibration member 112 is provided to be coupled to or separated from the support body 111.

The anti-vibration member 112 is a mass material having a predetermined level of mass, and may be configured to satisfy a predetermined level of moment of inertia, to serve to prevent torsional vibration of an engine (not illustrated) connected to the crankshaft 52 when the crankshaft 52 rotates. The mass value of the anti-vibration member 112 may be appropriately selected and applied according to the size of the ship, the specifications of the crankshaft 52 and the propeller, or the like.

As such, when the anti-vibration member 112 is installed on the support body 111, the space utilization inside the generator is increased, and the energy efficiency of the generator may be improved by preventing vibrations of the crankshaft 52.

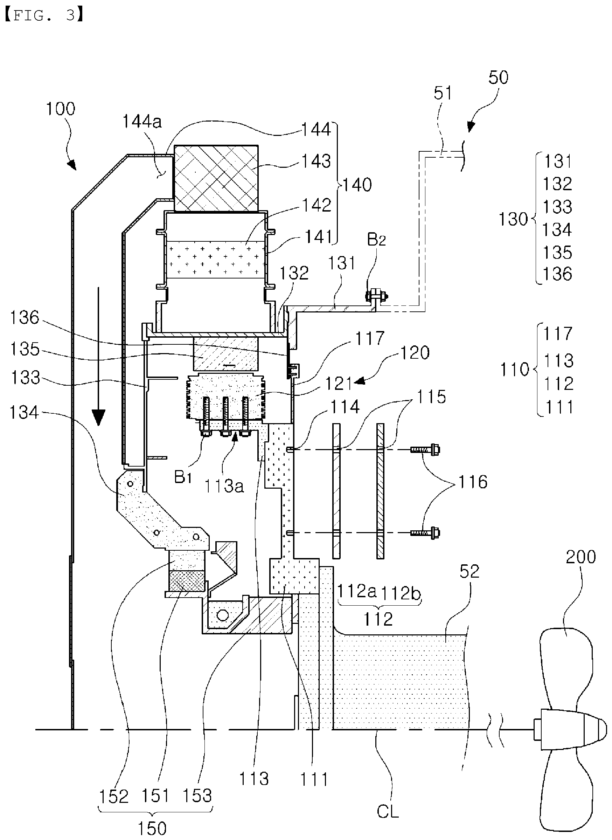

In an embodiment of the present disclosure, as illustrated in FIG. 3, the anti-vibration member 112 may include a first anti-vibration member 112a provided to be coupled to or separated from one surface of the support body 111 and having a predetermined level of mass, and a second anti-vibration member 112b provided to be coupled to or separated from the first anti-vibration member and having a predetermined level of mass.

The first anti-vibration member 112a and the second anti-vibration member 112b are provided to have different levels of masses, thereby efficiently providing a moment of inertia at a level suitable for the specifications of the crankshaft 52 or the engine (not illustrated).

In addition, in an embodiment of the present disclosure, the detachable vibration prevention unit 110 may include the support body 111 having a screw groove 114 in one surface to which the anti-vibration member 112 is coupled, the first anti-vibration member and the second anti-vibration member each having a fastening hole 115 corresponding to the screw groove, and a fastening member 116 of which an end passes through the fastening hole and is inserted into the screw groove.

In addition, in another embodiment of the present disclosure, the detachable vibration prevention unit 110 may further include a first sealing member 117 provided on at least one of the support body 111 and the anti-vibration member 112 and extending in the direction of the stator unit 130.

The end of the first sealing member 117 extends in the radial direction of the crankshaft 52 toward the stator unit 130, and by the first sealing member 117, the lubricating oil may be blocked from being introduced from the engine room 50.

On the other hand, as illustrated in FIGS. 2 and 3, the stator unit 130 may include a first frame 131 coupled to an engine room cover 51 of the engine room 50 by a bolt (B₂ in FIG. 2), a second frame 132 connected to the first frame 131 and to which a stator 135 facing the rotor 121 is connected, a third frame 133 having one side connected to the second frame and having an end extending in the outer circumferential direction of the crankshaft 52, and a fourth frame 134 connected to the end of the third frame.

In addition, in an embodiment, the stator unit 130 may further include a second sealing member 136 provided on at least one of the first frame 131 and the second frame 132 and extending in the direction of the crankshaft 52.

The end of the second sealing member 136 extends in the outer circumferential direction of the crankshaft 52 to be engaged with the first sealing member 117, to have a predetermined gap with the first sealing member 117, such that the first sealing member 117 is provided so as not to interfere with the rotation when the first sealing member 117 rotates by the rotation of the crankshaft 52.

According to the first sealing member 117 and the second sealing member 136 as described above, lubricating oil and foreign substances, which may be introduced from the engine room 50, may be more effectively blocked, thereby contributing to improving the durability of the generator.

On the other hand, the exciter 150 may include an exciter rotor 151 connected to the crankshaft 52 and rotating at the same speed as the engine, and an exciter stator 152 connected to the fourth frame 134 to face the exciter rotor with a predetermined gap. At least a portion of the exciter rotor and the exciter stator may be present in an extension of the outer circumference of the rotor 121 in the direction of the centerline CL.

According to the configuration of the stator unit 130 and the exciter 150 as described above, the generator 100 for a vessel may be directly coupled to the engine room cover 51, and the exciter 150 is present inside the generator 100 for a vessel, thereby reducing the size and specifications of the engine room 50 itself and the generator for a vessel itself and thus, improving the space utilization of the ship.

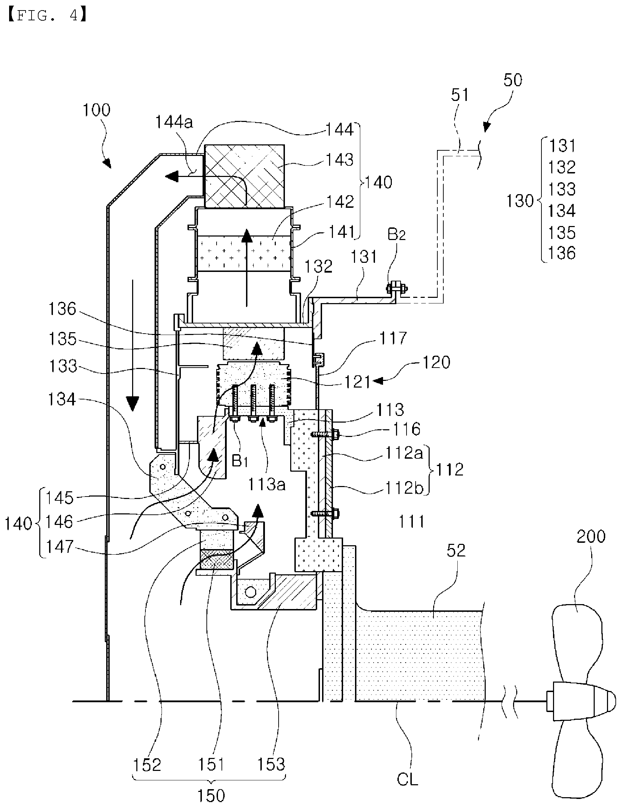

On the other hand, in the present disclosure, as illustrated in FIG. 4, the cooling unit 140 may be provided to include a cooling housing 141 connected to the second frame, a cooler 142 present in the cooling housing, an air pump 143 fixed to the exterior of the cooling housing, and an air duct 144, which is connected to the air pump, the fourth frame and the crankshaft 52 and includes a cooling passage 144a therein.

The cooling unit 140 serves to improve energy efficiency by cooling the generator 100 for a vessel.

In this case, the cooling unit may include an air guide member 145 connected to the third frame and having an end bent and extending to face the rotor 121, and a first cooling fan 146 connected to the end of the sub-support body 113 and having an end extending toward the outer circumference of the crankshaft 52.

Therefore, a cooling flow rate may be generated by the rotation of the rotor 121 inside of the generator 100 for a vessel.

In addition, the cooler 142, the air pump 143 fixed to the outside of the cooling housing, and the air duct 144 connected to the air pump, the fourth frame and the crankshaft 52 are located adjacently to the outside of the generator 100 for a vessel, for example, disposed on a maximum upper portion of the crankshaft 52, thereby exerting the effect of facilitating maintenance of the cooling unit 140.

In addition, the air guide member 145 serves to concentrate the cooling flow toward the rotor 121 to improve the cooling efficiency of the rotor 121.

On the other hand, the exciter 150 may include the exciter rotor 151 and the exciter stator 152 as described above, and the exciter rotor 151 is coupled to the crankshaft 52 by a coupling member 153. In addition, the coupling member 153 may be connected to the crankshaft 52, and the exciter stator 152 may be provided to face the exciter rotor 151 with a predetermined gap therebetween.

At least a portion of the exciter rotor 151 and the exciter stator 152 is provided on the same line as the rotor unit 120 in a direction perpendicular to the centerline CL, improving the space efficiency of the generator 100 for a vessel.

On the other hand, the cooling unit may include a second cooling fan 147 that is connected to the coupling member 153 and has an end extending toward the outer circumference of the rotor. According to the interaction of the first cooling fan 146 and the second cooling fan 147 as described above, the cooling efficiency of the generator 100 for a vessel may be improved by increasing the flow rate of the cooling fluid, toward the rotor 121, and by allowing the cooling fluid passing through the rotor 121 to circulate smoothly through the air duct 144, heat exchange of the cooling fluid may be efficiently performed.

According to an embodiment of the present disclosure, the air duct 144 and the air guide member 145 may be provided as non-magnetic bodies.

In an embodiment of the present disclosure, the air duct 144 and the air guide member 145 may be formed of a material including rubber. However, this is not necessarily limited by the present disclosure, and the material of the air duct 144 and the air guide member 145 may be appropriately selected and applied by those skilled in the art within the range of non-magnetic materials.

When the air duct 144 and the air guide member 145 are provided with a non-magnetic material, a phenomenon, in which some components of the magnetic flux passing through the stator 135 and the rotor 121 and the magnetic flux passing through the exciter stator 152 and the exciter rotor 151 pass through the stator unit 130, may be prevented.

In detail, when the air duct 144 and the air guide member 145 are provided as a non-magnetic material, a phenomenon, in which some components of the magnetic flux passing through the stator 135 and the rotor 121 and the magnetic flux passing through the exciter stator 152 and the exciter rotor 151 pass through the first, second, third and fourth frames 131,132,133 and 134 of the stator unit 130, causing electrical corrosion or electrolytic corrosion in the engine (not illustrated), may be prevented.

In addition, when the air duct 144 and the air guide member 145 are provided as a non-magnetic material, a phenomenon, in which some components of the magnetic flux passing through the stator 135 and the rotor 121 and the magnetic flux passing through the exciter stator 152 and the exciter rotor 151 pass through the first and second sealing members 117 and 136 and the coupling member 153, causing electrical corrosion or electrolytic corrosion in the engine (not illustrated), may be prevented. Accordingly, ultimately, a phenomenon causing failure of the entire propulsion system may be prevented.

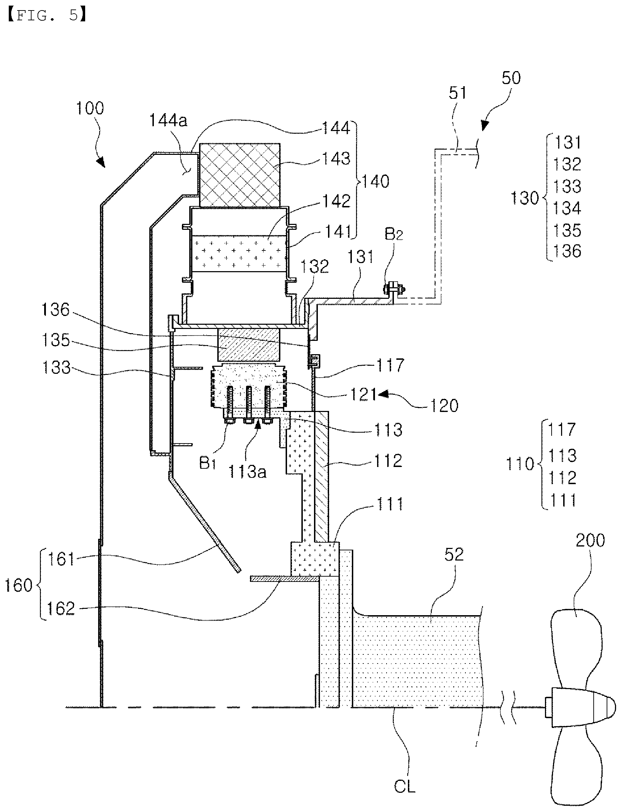

On the other hand, as illustrated in FIG. 5, a generator 100 for a vessel according to another embodiment of the present disclosure is connected to an engine room 50 for accommodating an engine (not illustrated) having the crankshaft 52. The generator for a vessel may include a detachable vibration prevention unit 110 connected to the crankshaft 52, and having a predetermined level of mass to reduce vibrations of the engine, a rotor unit 120 connected to the detachable vibration prevention unit 110 and supported by the detachable vibration prevention unit, a stator unit 130 fixed to the engine room 50 to face the rotor unit, a cooling unit 140 connected to the stator unit, and a flow guiding unit 160 connected to the crankshaft 52 and the stator unit 130.

The stator unit 130 may include a first frame 131 coupled to the engine room 50, a second frame 132 connected to the first frame and connected to a stator 135, and a third frame 133 having one side connected to the second frame 132 and having an end extending in the outer circumferential direction of the crankshaft.

The flow guiding unit 160 may be connected to the crankshaft 52 and the third frame 133 to guide the flow of air inside the generator 100 for a vessel.

In an embodiment of the present disclosure, the flow guiding unit 160 may include a first flow guide frame 161 connected to the third frame 133 and provided to be inclined, and a second flow guide frame 162 connected to the crankshaft 52, and extending in the direction of the first flow guide frame 161 in such a manner that the end thereof is provided to be spaced apart from the first flow guide frame 161.

According to the flow guiding unit 160 as described above, weight reduction of the generator 100 for a vessel may be obtained by excluding the exciter 150 from the generator 100 for a vessel.

In addition, as the structure of the generator 100 for a vessel may be simplified, the possibility of failure of the generator 100 for a vessel may be significantly reduced.

Therefore, the reliability of the generator 100 for a vessel may be improved.

In addition, according to the flow guiding unit 160 as described above, the cooling efficiency of the generator 100 for a vessel may be improved by optimizing the flow of air in the generator 100 for a vessel.

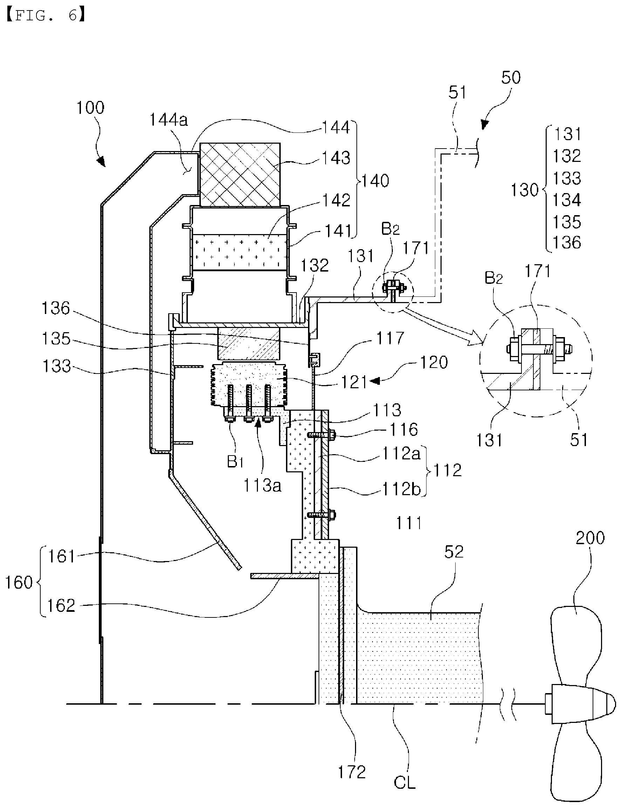

On the other hand, as illustrated in FIG. 6, a detachable vibration prevention unit 110 of a generator 100 for a vessel according to another embodiment of the present disclosure may include a support body 111 having one end connected to the crankshaft 52 and the other end extended in the radial direction of the crankshaft 52.

The rotor 121 may be connected to one surface of the support body 111.

An anti-vibration member 112 is provided on one surface of the support body 111, and a sub-support body 113 is provided on the other surface of the support body 111.

The anti-vibration member 112 is provided to be coupled to or separated from the support body 111. The anti-vibration member 112 is a mass material having a predetermined level of mass, and may be configured to satisfy a predetermined level of moment of inertia to serve to prevent torsional vibration of an engine (not illustrated) connected to the crankshaft 52 when the crankshaft 52 rotates.

The rotor unit 120 may include a rotor 121 spaced apart from the outer circumferential surface of the crankshaft 52 by being connected to the support body 111.

The stator unit 130 may include the stator 135 connected to the second frame 132 to face the rotor 121.

The engine room 50 may include an engine room cover 51 having an accommodating space therein, and the crankshaft 52 may be accommodated in the engine room cover 51.

In an embodiment of the present disclosure, the stator unit 130 may include the first frame 131 coupled to the engine room cover 51 of the engine room.

In this case, a first connection pad 171 provided as a non-magnetic material may be provided between the engine room cover 51 and the first frame 131.

Accordingly, the engine room cover 51, the first connection pad 171, and the first frame 131 may be coupled by a bolt B₂ passing therethrough.

Also, in an embodiment, a second connection pad 172 provided as a non-magnetic material may be provided between the support body 111 and the crankshaft 52.

A method of coupling the support body 111, the second connection pad 172, and the crankshaft 52 is not necessarily limited by the present disclosure, and the support body 111, the second connection pad 172, and the crankshaft 52 may be appropriately coupled to each other through a coupling unit such as a bolt or the like.

According to the first connection pad 171 and the second connection pad 172, a phenomenon in which magnetic flux components cause corrosion or electrolytic corrosion in an engine (not illustrated) may be prevented.

The above has been described with respect to an embodiment of the present disclosure, the scope of the present disclosure is not limited thereto, and various modifications and variations are possible within the scope without departing from the technical spirit of the present disclosure described in the claims, and this will be apparent to one of ordinary skill in the art.
- 50:: engine room
- 100:: generator for vessel
- 110:: detachable vibration prevention unit
- 111:: support body
- 112:: anti-vibration member
- 113:: sub-support body
- 114:: screw groove
- 115:: fastening hole
- 116:: fastening member
- 117:: first sealing member
- 120:: rotor unit
- 121:: rotor
- 130:: stator unit
- 131:: first frame
- 132:: second frame
- 133:: third frame
- 134:: fourth frame
- 135:: stator
- 136:: second sealing member
- 140:: cooling unit
- 141:: cooling housing
- 142:: cooler
- 143:: air pump
- 144:: air duct
- 145:: air guide member
- 146:: first cooling fan
- 147:: second cooling fan
- 150:: exciter
- 151:: exciter rotor
- 152:: exciter stator
- 153:: coupling member
- 160:: flow guiding unit
- 161:: first flow guide frame
- 162:: second flow guide frame
- 171:: first connection pad
- 172:: second connection pad

## Claims

1. A generator for a vessel connected to an engine room accommodating an engine provided with a crankshaft, the generator for a vessel comprising:
a detachable vibration prevention unit connected to the crankshaft and having a predetermined level of mass to reduce vibrations of the engine;
a rotor unit connected to and supported by the detachable vibration prevention unit;
a stator unit fixed to the engine room to face the rotor unit;
a cooling unit connected to the stator unit; and
an exciter connected to the crankshaft and the stator unit.

2. The generator for a vessel of claim 1, wherein the detachable vibration prevention unit comprises a support body having one end connected to the crankshaft and the other end extending in a radial direction of the crankshaft, and
the rotor unit comprises a rotor spaced apart from an outer circumferential surface of the crankshaft by being connected to the support body.

3. The generator for a vessel of claim 2, wherein the detachable vibration prevention unit comprises,
the support body in contact with the rotor on one surface thereof; and
an anti-vibration member provided to be coupled to, or separated from, a surface of the support body, facing the one surface of the support body, and having a predetermined level of mass.

4. The generator for a vessel of claim 3, wherein the detachable vibration prevention unit further comprises a sub-support body coupled to the one surface of the support body and having an end extending by being bent in a longitudinal direction of the crankshaft, and
the rotor unit comprises the rotor fixed to the sub-support body and disposed parallel to the crankshaft.

5. The generator for a vessel of claim 3, wherein the anti-vibration member comprises,
a first anti-vibration member provided to be coupled to or separated from one surface of the support body and having a predetermined level of mass; and
a second anti-vibration member provided to be coupled to or separated from the first anti-vibration member, and having a predetermined level of mass.

6. The generator for a vessel of claim 5, wherein the detachable vibration prevention unit comprises,
the support body having a screw groove in one surface to which the anti-vibration member is coupled;
the first and second anti-vibration members each having a fastening hole corresponding to the screw groove; and
a fastening member having an end penetrating through the fastening hole and inserted into the screw groove.

7. The generator for a vessel of claim 4, wherein the rotor is fixed to an extension of the sub-support body by a bolt.

8. The generator for a vessel of any one of claims 2 to 7, wherein the stator unit comprises,
a first frame coupled to the engine room;
a second frame connected to the first frame and to which a stator is connected;
a third frame having one side connected to the second frame and an end extending in an outer circumferential direction of the crankshaft; and
a fourth frame connected to the end of the third frame.

9. The generator for a vessel of claim 8, wherein the exciter comprises,
an exciter rotor connected to the crankshaft; and
an exciter stator connected to the fourth frame, to face the exciter rotor,
wherein at least a portion of the exciter rotor and the exciter stator is present within an extension line of an outer circumferential surface of the rotor.

10. The generator for a vessel of claim 8, wherein the cooling unit comprises,
a cooling housing connected to the second frame;
a cooler present in the cooling housing;
an air pump fixed to the outside of the cooling housing; and
an air duct connected to the air pump, the fourth frame, and the crankshaft.

11. The generator for a vessel of claim 10, wherein the cooling unit further comprises an air guide member connected to the third frame and having an end bent and extending to face the rotor.

12. The generator for a vessel of claim 4, wherein the cooling unit comprises a first cooling fan connected to an end of the sub-support body and having an end extending toward the outer circumferential surface of the crankshaft.

13. The generator for a vessel of claim 9, wherein the exciter rotor is connected to the crankshaft by a coupling member, and
the cooling unit comprises a second cooling fan connected to the coupling member and having an end extending toward an outer circumferential surface of the rotor.

14. The generator for a vessel of claim 3, wherein the detachable vibration prevention unit further comprises a first sealing member provided on at least one of the support body and the anti-vibration member, and extending in a direction of the stator unit.

15. The generator for a vessel of claim 8, wherein the stator unit further comprises a second sealing member provided on at least one of the first frame and the second frame, and extending in a direction of the crankshaft.

16. The generator for a vessel of claim 11, wherein the air duct and the air guide member are provided as non-magnetic bodies.

17. The generator for a vessel of claim 14, wherein the first sealing member is provided as a non-magnetic body.

18. The generator for a vessel of claim 15, wherein the second sealing member is provided as a non-magnetic body.

19. A generator for a vessel connected to an engine room accommodating an engine provided with a crankshaft, the generator for a vessel comprising:
a detachable vibration prevention unit connected to the crankshaft, and having a predetermined level of mass to reduce vibrations of the engine;
a rotor unit connected to and supported by the detachable vibration prevention unit;
a stator unit fixed to the engine room, to face the rotor unit;
a cooling unit connected to the stator unit; and
a flow guiding unit connected to the crankshaft and the stator unit.

20. The generator for a vessel of claim 19, wherein the stator unit comprises,
a first frame coupled to the engine room;
a second frame connected to the first frame and to which a stator is connected; and
a third frame having one side connected to the second frame and an end extending in an outer circumferential direction of the crankshaft,
wherein the flow guiding unit is connected to the crankshaft and the third frame.

21. The generator for a vessel of claim 20, wherein the flow guiding unit comprises,
a first flow guide frame connected to the third frame and provided to be inclined; and
a second flow guide frame connected to the crankshaft, and extending in a direction of the first flow guide frame in such a manner that an end thereof is spaced apart from the first flow guide frame.

22. The generator for a vessel of claim 20, wherein the detachable vibration prevention unit comprises a support body having one end connected to the crankshaft and the other end extending in a radial direction of the crankshaft,
the rotor unit comprises a rotor spaced apart from an outer circumferential surface of the crankshaft by being connected to the support body, and
the stator unit comprises the stator connected to the second frame and facing the rotor.

23. The generator for a vessel of claim 22, wherein the engine room comprises an engine room cover, and
the stator unit comprises the first frame coupled to the engine room cover of the engine room,
wherein the engine room cover and the first frame are provided with a first connection pad therebetween, provided as a non-magnetic body.

24. The generator for a vessel of claim 22, wherein the support body and the crankshaft are provided with a second connection pad therebetween, provided as a non-magnetic body.
